# FASCICULE DE BREVET EUROPEEN

(11) **EP 1 121 280 B1**
(45) Date de publication et mention de la délivrance du brevet: **11.06.2003**
(21) Numéro de dépôt: 99949068.3
(22) Date de dépôt: 18.10.1999
(51) Int. Cl.: B60T 8/18

(54) **DISPOSITIF D'ASSEMBLAGE ANGULAIREMENT REGLABLE ET PROCEDE UTILISANT CE DISPOSITIF**
WINKELVERSTELLBARE MONTAGEVORRICHTUNG UND EINE SOLCHE VORRICHTUNG VERWENDENDES VERFAHREN
ASSEMBLING DEVICE WITH ANGULAR ADJUSTMENT AND METHOD USING SAME

(30) Priorité: 20.10.1998 FR 9813188
(43) Date de publication de la demande: 08.08.2001
(73) Titulaire: Bosch Systemes de Freinage, 93700 Drancy (FR)
(72) Inventeur: KIENTZ, Jean-Marc, F-77270 Villeparisis (FR); PERRIN, Alain, F-93000 Bobigny (FR)
(74) Mandataire: Hurwic, Aleksander Wiktor
(86) Numéro de dépôt international: FR9902534
(87) Numéro de publication internationale: WO00023304

(56) Documents cités:
- EP-A- 0 631 891
- FR-A- 1 566 691
- FR-A- 2 232 467
- FR-A- 2 445 250

## Description

La présente invention concerne le domaine de l'assemblage et du réglage, en particulier dans le cadre du montage de composants sur véhicules à moteurs.

Plus précisément, l'invention concerne notamment un dispositif d'assemblage, du type de ceux qui comprennent : une barre d'accrochage présentant, sur une longueur déterminée, une section tranversale partiellement circulaire incluant au moins un méplat et présentant une dimension minimale et une dimension maximale; et un collier de serrage comprenant deux pattes susceptibles d'être rapprochées l'une de l'autre par serrage d'une vis qui les traverse, les pattes déterminant entre elles, avant serrage de la vis, un espacement supérieur à la dimension minimale et inférieur à la dimension maximale, le collier de serrage pouvant ainsi être monté sur la barre, avant insertion de la vis, par un mouvement transversal par rapport à cette barre.

Des dispositifs de ce type sont bien connus dans l'art antérieur dans différents domaines et sont en particulier utilisés pour permettre l'accrochage sur véhicule des ressorts de compensateurs de pression de freinage.

Le document FR-A-1.566.691 décrit un dispositif d'assemblage, comprenant une barre d'accrochage présentant une dimension maximale, et un collier de serrage comprenant deux pattes susceptibles d'être rapprochées l'une de l'autre par serrage d'une vis qui les traverse le collier de serrage pouvant être monté sur la barre avant insertion de la vis, par un mouvement transversal par rapport à la barre, et dans lequel le collier de serrage comprend un anneau ouvert et déformable, qui se prolonge pour former les deux pattes de serrage, cet anneau offrant un logement interne sensiblement circulaire de diamètre.

Un problème rencontré, dans cette application notamment, réside dans le fait que les dispositifs d'assemblage actuellement utilisés n'offrent aucune possibilité de rotation du collier de serrrage autour de la barre et donc aucun moyen de réglage de la longueur du ressort, ni en conséquence de la tension de ce dernier.

L'invention se situe dans ce contextè et a pour but de proposer une solution simple à ce problème.

A cette fin, le dispositif d'assemblage de l'invention, par ailleurs conforme à la définition qu'en donne le préambule ci-dessus, est essentiellement caractérisé en ce que le collier de serrage comprend un anneau ouvert et déformable, qui se prolonge pour former les deux pattes de serrage, cet anneau offrant un logement interne sensiblement circulaire de diamètre supérieur à la dimension maximale, et en ce que ce dispositif comprend en outre un profilé intercalaire, présentant un profil interne conformé pour épouser au moins partiellement la section de la barre et un profil externe conformé pour épouser au moins partiellement le logement interne de l'anneau, ce profilé étant ainsi susceptible d'être inséré entre la barre et l'anneau par un mouvement longitudinal par rapport à la barre.

La barre peut présenter deux méplats, auquel cas le profilé présente une section transversale en forme de "U".

Dans tous les cas, le profil externe du profilé est, de préférence, au moins partiellement cranté.

L'invention concerne également un procédé d'accrochage sur véhicule d'un ressort de compensateur de pression de freinage, ce procédé utilisant un dispositif tel que préalablement défini et étant essentiellement caractérisé en ce qu'il comprend les opérations consistant à disposer le collier de serrage autour d'une barre anti-roulis du véhicule, utilisée pour faire office de barre d'accrochage, à accrocher le ressort à une patte du collier de serrage, à imprimer au collier de serrage un mouvement de rotation autour de la barre jusqu'à obtenir une position de rotation finale du collier pour laquelle le ressort est tendu à une longueur prédéterminée, et à serrer le collier de serrage, dans sa position de rotation finale, au moyen de la vis.

D'autres caractéristiques et avantages de l'invention ressortiront clairement de la description qui en est faite ci-après, à titre indicatif et nullement limitatif, en référence aux dessins annexés, dans lesquels :
- la Figure 1 est une vue latérale et en coupe partielle d'un dispositif conforme à l'invention; et
- la Figure 2 est une vue en perspective illustrant l'application privilégiée du dispositif de la Figure 1.

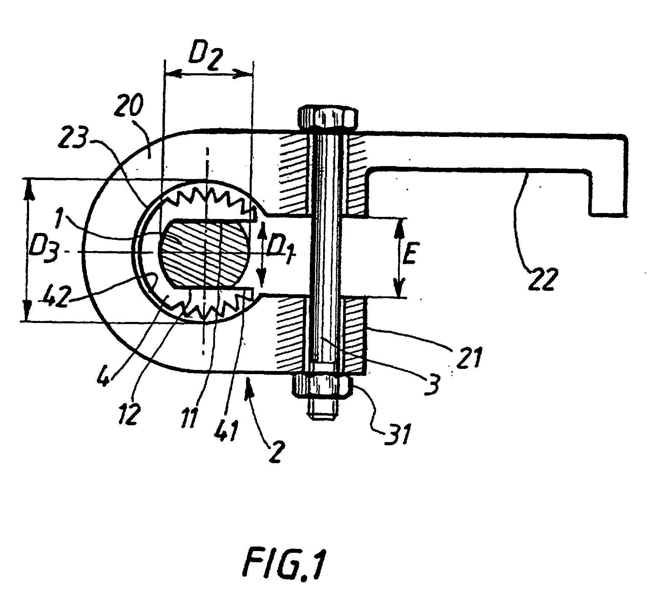

Comme le montre la figure 1, le dispositif d'assemblage de l'invention comprend essentiellement une barre d'accrochage 1 et un collier de serrage 2 muni de deux pattes de serrage 21, 22.

La barre d'accrochage 1 présente, sur une longueur déterminée, une section tranversale en général partiellement circulaire, qui est celle qu'illustre la Figure 1, qui inclut un ou deux méplats 11, 12, et qui présente une dimension minimale D1 et une dimension maximale D2.

Les pattes 21, 22 du collier de serrage 2 sont traversées par une vis 3 susceptible d'être serrée, éventuellement au moyen d'un écrou 31, pour rapprocher ces pattes l'une de l'autre et serrer ainsi le collier 2 sur la barre 1.

Avant serrage de la vis, les pattes 21, 22 du collier de serrage 2 déterminent entre elles un espacement E supérieur à la dimension minimale D1 de la section de la barre 1, et inférieur à la dimension maximale D2 de cette section, le collier de serrage 2 pouvant ainsi être monté sur la barre 1, avant insertion de la vis 3, par un mouvement transversal du collier par rapport à la cette barre.

Selon l'invention, le collier de serrage 2 comprend un anneau 20, et le dispositif comporte en outre un profilé intercalaire 4, destiné à être inséré entre la barre 1 et cet anneau 20.

L'anneau 20 est ouvert et déformable, se prolonge pour former les deux pattes de serrage 21, 22, et offre un logement interne 23 sensiblement circulaire, de diamètre D3 supérieur à la dimension maximale D2.

Le profilé intercalaire 4, qui est par exemple réalisé en un matériau métallique présente un profil interne 41 conformé pour épouser au moins partiellement la section de la barre, et un profil externe 42 conformé pour épouser au moins partiellement le logement interne 23 de l'anneau, ce profil externe 42 étant de préférence cranté au moins sur une partie de sa longueur pour garantir le maintien en rotation du collier 2 sur la barre 1.

Comme le comprendra aisément l'homme de l'art, il est ainsi possible d'insérer le profilé 4 entre la barre 1 et l'anneau 2 par un mouvement de rapprochement mutuel du collier 2 et du profilé 4; effectué dans le sens de la longueur de la barre.

Dans le cas où la barre présente deux méplats 11, 12, le profilé 4 présente une section transversale en forme de "U", telle qu'illustrée sur la Figure 1.

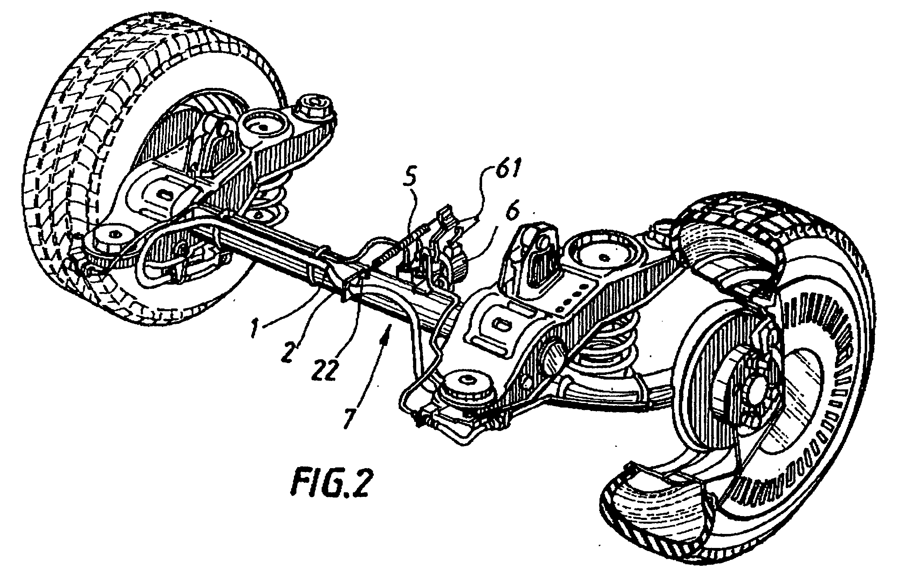

L'invention est notamment applicable pour réaliser l'accrochage sur véhicule d'un ressort 5 de compensateur 6 de pression de freinage, cette application privilégiée étant illustrée à la Figure 2.

Dans ce cas, le compensateur 6 est rendu solidaire de l'essieu 7 du véhicule, et le problème à résoudre consiste à accrocher, à la barre anti-roulis 1 de ce véhicule, le ressort 5 qui est classiquement utilisé pour transmettre au levier 61 du compensateur 6 une force dépendant de la charge du véhicule et propre à modifier le fonctionnement de ce compensateur 6.

Le procédé consiste alors à disposer le collier de serrage 2 autour de la barre anti-roulis 1, qui est utilisée comme barre d'accrochage, à accrocher le ressort 5 à une patte 22 du collier de serrage 2, à imprimer au collier de serrage 2 un mouvement de rotation autour de la barre 1 jusqu'à obtenir une position de rotation finale du collier 2 pour laquelle le ressort 5 est tendu à une longueur prédéterminée, et à serrer le collier de serrage 2, dans sa position de rotation finale, au moyen de la vis 3, par rotation de la vis ou de l'écrou 31 le cas échéant.

## Revendications

1. Dispositif d'assemblage, comprenant : une barre d'accrochage (1) présentant, sur une longueur déterminée, une section tranversale partiellement circulaire incluant au moins un méplat (11, 12) et présentant une dimension minimale (D1) et une dimension maximale (D2); et un collier de serrage (2) comprenant deux pattes (21, 22) susceptibles d'être rapprochées l'une de l'autre par serrage d'une vis (3) qui les traverse, les pattes (21, 22) déterminant entre elles, avant serrage de la vis, un espacement (E) supérieur à la dimension minimale (D1) et inférieur à la dimension maximale (D2), le collier de serrage (2) pouvant ainsi être monté sur la barre (1), avant insertion de la vis (3), par un mouvement transversal par rapport à la cette barre, **caractérisé en ce que** le collier de serrage (2) comprend un anneau (20) ouvert et déformable, qui se prolonge pour former les deux pattes de serrage (21, 22), cet anneau (20) offrant un logement interne (23) sensiblement circulaire de diamètre (D3) supérieur à la dimension maximale (D2), et **en ce que** ce dispositif comprend en outre un profilé intercalaire (4), présentant un profil interne (41) conformé pour épouser au moins partiellement la section de la barre et un profil externe (42) conformé pour épouser au moins partiellement le logement interne (23) de l'anneau, ce profilé étant ainsi susceptible d'être inséré entre la barre (1) et l'anneau (20) par un mouvement longitudinal par rapport à la barre.

2. Dispositif d'assemblage suivant la revendication 1, **caractérisé en ce que** la barre (1) présente deux méplats (11, 12) et **en ce que** le profilé (4) présente une section transversale en forme de "U".

3. Dispositif d'assemblage suivant la revendication 1 ou 2, **caractérisé en ce que** le profil externe (42) du profilé (4) est au moins partiellement cranté.

4. Procédé d'accrochage sur véhicule d'un ressort (5) de compensateur (6) de pression de freinage, ce procédé utilisant un dispositif conforme à l'une quelconque des revendications précédentes, **caractérisé en ce qu'**il comprend les opérations consistant à disposer le collier de serrage (2) autour d'une barre anti-roulis (1) du véhicule, utilisée pour faire office de barre d'accrochage, à accrocher le ressort (5) à une patte (22) du collier de serrage (2), à imprimer au collier de serrage (2) un mouvement de rotation autour de la barre (1) jusqu'à obtenir une position de rotation finale du collier (2) pour laquelle le ressort (5) est tendu à une longueur prédéterminée, et à serrer le collier de serrage (2), dans sa position de rotation finale, au moyen de la vis (3).

## Patentansprüche

1. Montagevorrichtung mit: einer Einhängestange (1), die auf einer bestimmten Länge einen teilweise kreisförmigen Querschnitt mit mindestens einer Abflachung (11, 12) aufweist und eine minimale Abmessung (D1) und eine maximale Abmessung (D2) aufweist; und einer Klemmschelle (2) mit zwei Laschen (21, 22), die durch Festziehen einer Schraube (3), die diese durchquert, aneinander angenähert werden können, wobei die Laschen (21, 22) zwischen sich vor dem Festziehen der Schraube einen Abstand (E) festlegen, der größer als die minimale Abmessung (D1) und kleiner als die maximale Abmessung (D2) ist, wobei die Klemmschelle (2) somit vor dem Einfügen der Schraube (3) durch eine bezüglich dieser Stange quer verlaufende Bewegung an der Stange (1) montiert werden kann, **dadurch gekennzeichnet, daß** die Klemmschelle (2) einen offenen und verformbaren Ring (20) aufweist, der sich verlängert, um die zwei Klemmlaschen (21, 22) zu bilden, wobei dieser Ring (20) eine im wesentlichen kreisförmige innere Aufnahme (23) mit einem Durchmesser (D3), der größer ist als die maximale Abmessung (D2), bietet, und daß diese Vorrichtung außerdem ein Zwischenprofilstück (4) aufweist, das ein inneres Profil (41) aufweist, das so ausgebildet ist, daß es zumindest teilweise an den Querschnitt der Stange angepaßt ist, und ein äußeres Profil (42) aufweist, das so ausgebildet ist, daß es zumindest teilweise an die innere Aufnahme (23) des Rings angepaßt ist, wobei dieses Profilstück somit durch eine Längsbewegung bezüglich der Stange zwischen die Stange (1) und den Ring (20) eingefügt werden kann.

2. Montagevorrichtung nach Anspruch 1, **dadurch gekennzeichnet, daß** die Stange (1) zwei Abflachungen (11, 12) aufweist und daß das Profilstück (4) einen "U"-förmigen Querschnitt aufweist.

3. Montagevorrichtung nach Anspruch 1 oder 2, **dadurch gekennzeichnet, daß** das äußere Profil (42) des Profilstücks (4) zumindest teilweise gerippt ist.

4. Verfahren zum Einhängen einer Feder (5) eines Bremsdruckkompensators (6) an einem Fahrzeug, wobei dieses Verfahren eine Vorrichtung nach einem der vorangehenden Ansprüche verwendet, **dadurch gekennzeichnet, daß** es die Vorgänge umfaßt, die aus dem Anordnen der Klemmschelle (2) um eine Stabilisationsstange (1) des Fahrzeugs, die verwendet wird, um als Einhängestange zu dienen, aus dem Einhängen der Feder (5) in eine Lasche (22) der Klemmschelle (2), aus dem Übertragen einer Rotationsbewegung um die Stange (1) auf die Klemmschelle (2), bis eine Rotationsendstellung der Schelle (2) erhalten wird, für welche die Feder (5) auf eine vorbestimmte Länge gespannt ist, und aus dem Spannen der Klemmschelle (2) in ihrer Rotationsendstellung mittels der Schraube (3) bestehen.

## Claims

1. Assembly device comprising: an attachment bar (1) having, over a given length, a partially circular cross section including at least one flat (11, 12) and having a minimum dimension (D1) and a maximum dimension (D2); and a clamping collar (2) comprising two lugs (21, 22) which can be brought closer together by tightening a screw (3) which passes through them, the lugs (21, 22) before the screw is tightened being spaced apart by a distance (E) greater than the minimum dimension (D1) and less than the maximum dimension (D2), it thus being possible for the clamping collar (2) to be mounted on the bar (1) before the screw (3) is inserted, by a transverse movement with respect to this bar, **characterized in that** the clamping collar (2) comprises an open and deformable ring (20) which is extended to form the two clamping lugs (21, 22), this ring (20) offering a substantially circular internal housing (23) of diameter (D3) greater than the maximum dimension (D2), and **in that** the device further comprises a profiled insert piece (4) which has an internal profile (41) shaped to at least partially mate with the cross section of the bar and an external profile (42) shaped to at least partially mate with the internal housing (23) of the ring, it thus being possible for this profiled piece to be inserted between the bar (1) and the ring (20) by a longitudinal movement with respect to the bar.

2. Assembly device according to Claim 1, **characterized in that** the bar (1) has two flats (11, 12) and **in that** the profiled piece (4) has a U-shaped cross section.

3. Assembly device according to Claim 1 or 2, **characterized in that** the external profile (42) of the profiled piece (4) is at least partially ridged.

4. Method for attaching to a vehicle a spring (5) of a brake-pressure equalizing device (6), this method employing a device in accordance with any one of the preceding claims, **characterized in that** it comprises the operations that consist in fitting the clamping collar (2) around an anti-roll bar (1) of the vehicle, this bar being used to act as an attachment bar; attaching the spring (5) to one lug (22) of the clamping collar (2); rotating the clamping collar (2). about the bar (1) until a final rotated position of the collar (2) is obtained in which the spring (5) is stretched to a predetermined length; and tightening the clamping collar (2) in its final rotated position, using the screw (3).
